# EUROPEAN PATENT APPLICATION

(11) **EP 1 932 740 A1**
(43) Date of publication of application: **18.06.2008**
(21) Application number: 06798511.9
(22) Date of filing: 03.10.2006
(51) Int. Cl.: B60W 10/26, B60L 11/14, B60W 10/08, B60W 20/00, H02P 5/74

(54) **HYBRID AUTOMOBILE AND METHOD OF CONTROLLING THE SAME**

(30) Priority: 07.10.2005 JP 2005295229
(71) Applicant: TOYOTA JIDOSHA KABUSHIKI KAISHA, Toyota-shi Aichi 471-8571 (JP)
(72) Inventor: KANADA, Naoya c/o Toyota Technical Development Corporation, Aichi 4700334 (JP); YOSHIDA, Hiroshi c/o Toyota Tachnical Development Corporation, Aichi 4700334 (JP); MOGARI, Takeshi c/o Toyota Technical Development Corporation, Toyota-shi, Aichi 4700334 (JP); SUZUKI, Takahiro c/o Toyota Technical Development Corporation, Aichi 4700334 (JP)
(74) Representative: TBK-Patent
(86) International application number: PCT/JP2006/320161
(87) International publication number: WO 2007/043500

(57) **Abstract**

A controller obtains a planned travel distance from a current position of a vehicle to a preset charging point from a car navigation system (S20), and based on the obtained planned travel distance, sets upper and lower limit values for controlling SOC of an electric storage lower as it comes closer to the charging point (S30). The controller controls the SOC of the electric storage such that the SOC is within the set upper and lower limits of SOC control (S40).

## Description

### Technical Field

The present invention relates to a hybrid vehicle and, more specifically, to a hybrid vehicle of which electric storage can be charged from a power source outside of the vehicle.

### Background Art

Recently, hybrid vehicles have attracting attention as environmentally friendly vehicles. A hybrid vehicle has, in addition to a conventional internal combustion engine, an electric storage such as a battery and an electric motor generating vehicle driving power using electric power from the electric storage, as power sources.

Among the hybrid vehicles as such, a hybrid vehicle has been known which allows charging of the electric storage using a power source outside the vehicle. The hybrid vehicle with external charging function can be less dependent on the internal combustion engine, and as a result, can attain higher mileage, better contributing to environmental conservation.

Japanese Patent Laying-Open No. 8-154307 discloses a hybrid vehicle having such external charging function. The hybrid vehicle includes a battery that can be charged by an external charger, a motor driving wheels by the electric power from the battery, control means for controlling motor operation, an internal combustion engine used directly or indirectly for driving the wheels, and run-time-related amount calculating means for calculating an amount related to the run-time after the battery is charged by the external charger. The control means limits an output of the electric motor when the run-time-related amount calculated by the run-time-related amount calculating means reaches a prescribed amount.

In the hybrid vehicle, the output of the electric motor is limited when the vehicle travels for a long time without external charging and, naturally, the output of the electric motor is limited when the vehicle continuously travels by consuming fuel by the internal combustion engine. Therefore, the driver is encouraged to conduct external charging. Thus, the hybrid vehicle can reduce dependency on the internal combustion engine.

According to the hybrid vehicle disclosed in Japanese Patent Laying-Open No. 8-154307 described above, external charging becomes a routine task for the driver and, as a result, dependency on the internal combustion engine can be made lower. In the hybrid vehicle, however, the driver is simply urged to conduct external charging based on the run-time after battery charging by the external charger. Therefore, if the state of charge (SOC) of the battery is sufficiently high before the start of actual external charging, not many charges can be obtained from the external charger, and the advantage of this approach cannot fully be enjoyed.

### Disclosure of the Invention

The present invention was made in order to solve these problems and its object is to provide a hybrid vehicle that can reliably provide sufficient amount of charges from the external charger to the electric storage.

The present invention provides a hybrid vehicle having an internal combustion engine and an electric motor mounted as power sources, including: a rechargeable electric storage supplying electric power to the electric motor; an electric power generating device generating electric power using an output of the internal combustion engine and supplying the generated electric power to the electric storage; an electric power input unit receiving electric power applied from the outside of the vehicle for charging the electric storage; a control unit for controlling an amount of charge from the electric power generating device to the electric storage such that a state amount representing state of charge of the electric storage is adjusted within a prescribed control range or to a control target value; a position detecting unit for detecting current position of the hybrid vehicle; and setting unit for setting lower a threshold value defining the prescribed control range or the control target value, as travel distance from the current position detected by the position detecting unit to a preset charging point is shorter.

In the hybrid vehicle in accordance with the present invention, the electric storage can be charged, receiving electric power applied from the outside of the vehicle at the electric power input unit. Further, when the SOC of the electric storage lowers during traveling, the electric storage can be charged by driving the internal combustion engine and the electric power generator. While the vehicle is traveling, the control unit controls the SOC of the electric storage such that the SOC is kept within a prescribed control range or at a control target value. Specifically, when the SOC of the electric storage lowers, the controller charges the electric storage by driving the internal combustion engine and the electric power generator. Here, in the hybrid vehicle, the prescribed control range or the control target value is set lower as the travel distance from the current position of the vehicle to a preset charging point is shorter. Therefore, it follows that when the hybrid vehicle reaches the charging point, the SOC of the electric storage is lower than usual.

Therefore, by the hybrid vehicle of the present invention, the electric storage can be charged with sufficient amount of charges from the external power source. As a result, the vehicle can be less dependent on the internal combustion engine while it is traveling, leading to higher mileage. Further, it can better contribute to environmental conservation.

Preferably, the electric power applied from the outside of the vehicle is electric power from a commercial power source. The charging point is home of the user of the hybrid vehicle.

For the hybrid vehicle, the charging point is one's home where the driver can charge the electric storage sufficiently at low cost using commercial power source after returning home. When a charging point is on the way to a destination, the user generally desires charging in a short time, as he/she wishes to reach the destination earlier. In the hybrid vehicle, even when such a charging point on the way to the destination comes closer, the setting unit does not set the prescribed control range or control target value lower. Therefore, in the hybrid vehicle, when the electric storage is charged at the charging point on the way to the destination, unnecessarily long charging time can be avoided.

Preferably, when the internal combustion engine is stopped, the electric power generating device can start an operation of the internal combustion engine using electric power from the electric storage. The setting unit sets the threshold value or the control target value such that the state amount does not fall below a lower limit value at which the electric power generating device can start the operation of the internal combustion engine using the electric power from the electric storage.

In the hybrid vehicle, minimum electric power sufficient to start the internal combustion engine by the power generator using the electric power from the electric storage is reliably kept when the vehicle arrives at the charging point. Therefore, even when the hybrid vehicle reaches the charging point and must start without charging, the internal combustion engine can be started without fail.

Preferably, the setting unit changes the lower limit level in accordance with a region to which the charging point belongs.

Generally, when the temperature of the internal combustion engine lowers, oil viscosity increases and power resistance of cranking increases. Further, when the temperature of the electric storage lowers, the electric storage comes to have smaller capacity. Because of these factors, starting characteristics of the internal combustion engine are lower in a cold region than in a warm region. Therefore, in the hybrid vehicle, based on the region-dependent difference in starting characteristics of the internal combustion engine, the lower limit level can be changed dependent on the region where the charging point is located. Therefore, in the hybrid vehicle, the lower limit level of the prescribed control range or the control target value can appropriately be set dependent on the region where the charging point is located.

Preferably, the setting unit changes the lower limit level in accordance with the temperature of the internal combustion engine.

As described above, when the temperature of the internal combustion engine lowers, oil viscosity increases and power resistance of cranking increases, so that starting characteristics of the internal combustion engine deteriorate. Therefore, in the hybrid vehicle, based on the difference in starting characteristics dependent on the temperature of the internal combustion engine, the lower limit level can be changed in accordance with the temperature of the internal combustion engine. Therefore, in the hybrid vehicle, the lower limit level of the prescribed control range or the control target value can appropriately be set dependent on the temperature of the internal combustion engine.

Preferably, the setting unit changes the lower limit level in accordance with the temperature of the electric storage.

As described above, when the temperature of the electric storage lowers, the electric storage comes to have smaller capacity and sufficient torque current cannot be supplied from the electric storage to the power generator. As a result, starting characteristics of the internal combustion engine deteriorate. Therefore, in the hybrid vehicle, based on the difference in starting characteristics of the internal combustion engine dependent on the temperature of the electric storage, the lower limit level can be changed in accordance with the temperature of the electric storage. Therefore, in the hybrid vehicle, the lower limit level of the prescribed control range or the control target value can appropriately be set dependent on the temperature of the electric storage.

Preferably, the electric power generating device includes an additional electric motor having a rotation shaft mechanically linked to a crank shaft of the internal combustion engine, and a first inverter provided corresponding to the additional electric motor. The hybrid vehicle further includes a second inverter provided corresponding to the electric motor, and an inverter control unit for controlling the first and second inverters. The additional electric motor and the electric motor include first and second poly-phase windings as stator windings, respectively. The electric power input unit is connected to a first neutral point of the first poly-phase winding and to a second neutral point of the second poly-phase winding and applies AC power supplied from the outside of the vehicle to the first and second neutral points. The inverter control unit controls the first and second inverters in a coordinated manner such that when the AC power is supplied to the first and second neutral points, the AC power is converted to DC power and output to the electric storage.

In the hybrid vehicle, using the additional electric motor included in the power generator, the electric motor as the power source, the first and second inverters provided corresponding to these electric motors respectively and the inverter control unit, charging of the electric storage by the power source outside of the vehicle is realized. Therefore, it is unnecessary to separately provide an external charging device for the hybrid vehicle, and better fuel efficiency can be attained as the vehicle can be reduced in size and weight.

As described above, according to the present invention, when the hybrid vehicle arrives at the charging point, the SOC of the electric storage is lower than usual and, therefore, the electric storage can be charged with sufficient amount of charges from the external power source. As a result, the vehicle can be less dependent on the internal combustion engine while it is traveling, leading to higher mileage. Further, it can better contribute to environmental conservation.

### Brief Description of the Drawings

Fig. 1 is an overall block diagram of the hybrid vehicle in accordance with an embodiment of the present invention.
Fig. 2 is a functional block diagram of the controller shown in Fig. 1.
Fig. 3 is a functional block diagram of the converter control unit shown in Fig. 2.
Fig. 4 is a functional block diagram of first and second inverter control units shown in Fig. 2.
Fig. 5 is a circuit diagram showing a zero-phase equivalent circuit of the motor generators and the inverters shown in Fig. 1.
Fig. 6 is a flowchart representing a control structure of a program related to determination to start charging, by the controller shown in Fig. 1.
Fig. 7 illustrates the concept of SOC control amount of the electric storage shown in Fig. 1.
Fig. 8 shows SOC variation of the electric storage.
Fig. 9 is a flowchart of the process related to SOC control of the electric storage by the controller shown in Fig. 1.
Fig. 10 shows an exemplary setting of a value corresponding to the lower limit level of SOC control target.
Fig. 11 shows another exemplary setting of a value corresponding to the lower limit level of SOC control target.
Fig. 12 shows temperature dependency of the capacity of electric storage.

### Best Modes for Carrying Out the Invention

In the following, embodiments of the present invention will be described in detail with reference to the figures. Throughout the figures, the same or corresponding portions are denoted by the same reference characters and description thereof will not be repeated.

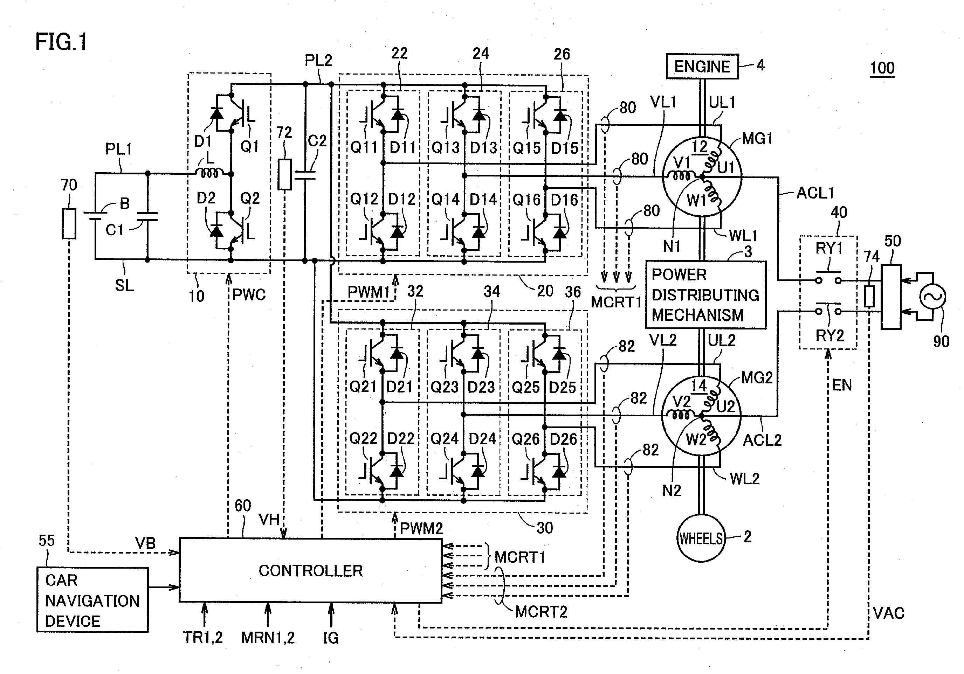

Fig. 1 is an overall block diagram of a hybrid vehicle 100 in accordance with an embodiment of the present invention. Referring to Fig. 1, hybrid vehicle 100 includes an engine 4, motor generators MG1 and MG2, a power distributing mechanism 3 and wheels 2. Further, hybrid vehicle 100 includes an electric storage B, a boost converter 10, inverters 20 and 30, a controller 60, a car navigation device 55, capacitors C1 and C2, power lines PL1 and PL2, a ground line SL, U-phase lines UL1 and UL2, V-phase lines VL1 and VL2, W-phase lines WL1 and WL2, voltage sensors 70 and 72, and current sensors 80 and 82. Hybrid vehicle 100 further includes power input lines ACL1 and ACL2, a relay circuit 40, an input terminal 50, and a voltage sensor 74.

Power distributing mechanism 3 is linked to engine 4 and to motor generators MG1 and MG2, and distributes power among these. By way of example, a planetary gear mechanism having three rotation shafts of a sun gear, a planetary carrier and a ring gear may be used as the power distributing mechanism 3. These three shafts of rotation are respectively connected to respective rotation shafts of engine 4 and motor generators MG1 and MG2. For instance, it is possible to mechanically connect engine 4 and motor generators MG1 and MG2 to power distributing mechanism 3 by making the rotor of motor generator MG 1 hollow and passing a crank shaft of engine 4 through the center thereof.

Rotation shaft of motor generator MG2 is linked to wheel 2 by a reduction gear or a running gear, not shown. Further, a reduction mechanism for the rotation shaft of motor generator MG2 may further be incorporated inside the power distributing mechanism 3.

Motor generator MG1 is incorporated in the hybrid vehicle 100, operating as a generator driven by the engine 4 and as an electric motor that can start the operation of engine 4. Motor generator MG2 is incorporated in the hybrid vehicle 100 as electric motor driving wheel 2 as the driving wheel.

Electric storage B has its positive electrode connected to power line PL1 and its negative electrode connected to ground line SL. Capacitor C 1 is connected between power line PL1 and ground line SL.

Boost converter 10 includes a reactor L, npn transistors Q1 and Q2, and diodes D1 and D2. The npn transistors Q1 and Q2 are connected in series between power line PL2 and ground line SL. Between the collector and emitter of npn transistors Q1 and Q2, diodes D1 and D2 are connected, respectively, to cause a current flow from the emitter side to the collector side. Reactor L has one end connected to a node of npn transistors Q1 and Q2, and the other end connected to power line PL1.

As the above-described npn transistors and other npn transistors that will be described later in the specification, an IGBT (Insulated Gate Bipolar Transistor) may be used. Further, in place of the npn transistor, a power switching element such as a power MOSFET (Metal Oxide Semiconductor Field-Effect Transistor) may be used.

Capacitor C2 is connected between power line PL2 and ground line SL. Inverter 20 includes a U-phase arm 22, a V-phase arm 24 and a W-phase arm 26. U-phase arm 22, V-phase arm 24 and W-phase arm 26 are connected in parallel between power line PL2 and ground line SL. U-phase arm 22 consists of series-connected npn transistors Q11 and Q12, V-phase arm 24 consists of series-connected npn transistors Q13 and Q14, and W-phase arm 26 consists of series-connected npn transistors Q15 and Q16. Between the collector and emitter of npn transistors Q11 to Q16, diodes D11 to D16 are connected, respectively, to cause current flow from the emitter side to the collector side.

Motor generator MG 1 includes a three-phase coil 12 as a stator coil. U-phase coil U1, V-phase coil V1 and W-phase coil W1 forming the three-phase coil 12 have one end connected together to form a neutral point N1, and have the other end connected to nodes between npn transistors of U-phase arm 22, V-phase arm 24 and W-phase arm 26 of inverter 20.

Inverter 30 includes a U-phase arm 32, a V-phase arm 34 and a W-phase arm 36. Motor generator MG2 includes a three-phase coil 14 as a stator coil. Inverter 30 and motor generator MG2 have the same structures as inverter 20 and motor generator MG1, respectively.

Relay circuit 40 includes relays RY1 and RY2. Mechanical contact relays may be used as relays RY1 and RY2, or semiconductor relays may be used. One end of power input line ACL1 is connected to one end of relay RY1, and the other end of power input line ACL1 is connected to the neutral point N1 of three-phase coil 12 of motor generator MG1. Further, one end of power input line ACL2 is connected to one end of relay RY2, and the other end of power input line ACL2 is connected to the neutral point N2 of three-phase coil 14 of motor generator MG2. Relays RY1 and RY2 have the other end connected to input terminal 50.

Electric storage B is a rechargeable DC power source, such as a nickel hydride or lithium ion secondary battery. Electric storage B outputs a DC power to boost converter 10. Further, electric storage B is charged by boost converter 10. It is noted that a large capacity capacitor may be used as electric storage B.

Voltage sensor 70 detects voltage VB of electric storage B, and outputs the detected voltage VB to controller 60. Capacitor C1 smoothes voltage variation between power supply line PL1 and ground line SL.

In accordance with a signal PWC from controller 60, boost converter 10 boosts the DC voltage received from electric storage B using reactor L, and outputs the boosted voltage to power line PL2. Specifically, in accordance with the signal PWC from controller 60, boost converter 10 accumulates the current that flows in accordance with the switching operation of npn transistor Q2 as magnetic field energy in reactor L, thereby boosting the DC voltage from electric storage B. Then, boost converter 10 outputs the boosted voltage through diode D1 to power line PL2 in synchronization with the off-timing of npn transistor Q2.

Further, boost converter 10 lowers the DC voltage supplied from inverter 20 and/or 30 through power line PL2 to the voltage level of electric storage B and charges electric storage B, in accordance with the signal PWC from controller 60.

Capacitor C2 smoothes voltage variation between power supply line PL2 and ground line SL. Voltage sensor 72 detects voltage across terminals of capacitor C2, that is, voltage VH of power line PL2 with respect to ground line SL, and outputs the detected voltage VH to controller 60.

In accordance with a signal PWM1 from controller 60, inverter 20 converts the DC voltage received from power line PL2 to a three-phase AC voltage, and outputs the converted three-phase AC voltage to motor generator MG1. Consequently, motor generator MG1 is driven to generate a designated torque. Further, inverter 20 converts three-phase AC voltage generated by motor generator MG1 receiving an output from engine 4 to a DC voltage in accordance with the signal PWM1 from controller 60, and outputs the converted DC voltage to power line PL2.

In accordance with a signal PWM2 from controller 60, inverter 30 converts the DC voltage received from power line PL2 to a three-phase AC voltage, and outputs the converted three-phase AC voltage to motor generator MG2. Consequently, motor generator MG2 is driven to generate a designated torque. Further, inverter 30 converts three-phase AC voltage generated by motor generator MG2 receiving rotational force of wheel 2 at the time of regenerative braking of the vehicle in accordance with the signal PWM2 from controller 60, and outputs the converted DC voltage to power line PL2.

The regenerative braking here refers to braking with regeneration through a foot brake operation by a driver of the vehicle, or deceleration (or stopping acceleration) of the vehicle while regenerating power, by releasing the accelerator pedal during running, without operating the foot brake.

Further, when electric storage B is charged from commercial power source 90 connected to input terminal 50, inverters 20 and 30 convert the AC power supplied to the neutral points N1 and N2 of three-phase coils 12 and 14 through power input lines AL1 and AL2 from commercial power source 90 to a DC power and output the same to power line PL2.

Motor generators MG1 and MG2 are three-phase AC electric motors, implemented, for example, by three-phase AC synchronous motors. Motor generator MG1 generates a three-phase AC voltage using an output of engine 4, and outputs the generated three-phase AC voltage to inverter 20. Further, motor generator MG1 generates driving force by the three-phase AC voltage received from inverter 20, and starts engine 4. Motor generator MG2 generates a vehicle driving torque by the three-phase AC voltage received from inverter 30. Further, motor generator MG2 generates a three-phase AC voltage and outputs the voltage to inverter 30, at the time of regenerative braking of the vehicle.

When an input permission signal EN from controller 60 is activated, relay circuit 40 electrically connects input terminal 50 to power input lines ACL1 and ACL2. Specifically, when the input permission signal EN is activated, relay circuit 40 turns relays RY1 and RY2 on, and turns relays RY1 and RY2 off when the input permission signal EN is inactivated.

Input terminal 50 is for connecting the commercial power source 90 outside the vehicle to hybrid vehicle 100. Hybrid vehicle 100 may have the electric storage B charged from commercial power source 90 outside the vehicle connected through input terminal 50, by the method described later.

Car navigation device 55 detects a current position of hybrid vehicle 100 and displays the current position on a display unit, not shown. Further, car navigation device 55 calculates a planned travel distance from the current position to a charging point where electric storage B is charged by commercial power source 90, and outputs the calculated planned travel distance to controller 60. As the charging point where electric storage B is charged by commercial power source 90, one's home is set, expecting sufficient charging after returning home. The car navigation device 55 may allow setting of the charging point by the driver.

As to the method of detecting the current position of the vehicle, a known method such as GPS (Global Positioning System) measuring the vehicle position using artificial satellites or a method using beacons provided on the road, may be used.

Current sensor 80 detects a motor current MCRT1 flowing through motor generator MG1, and outputs the detected motor current MCRT1 to controller 60. Current sensor 82 detects a motor current MCRT2 flowing through motor generator MG2, and outputs the detected motor current MCRT2 to controller 60. Voltage sensor 74 detects a voltage VAC of commercial power source 90 connected to input terminal 50, and outputs the detected voltage VAC to controller 60.

Controller 60 generates a signal PWC for driving boost converter 10 and signals PMW1 and PWM2 for driving inverters 20 and 30, respectively, and outputs the generated signals PWC, PWM1 and PWM2 to boost converter 10 and inverters 20 and 30, respectively.

Now, when a signal IG from an ignition key (or an ignition switch, same in the following), not shown, indicates an OFF position and an AC power is supplied from commercial power source 90 to input terminal 50, controller 60 activates the input permission signal EN that is output to relay circuit 50. Then, controller 60 generates signals PWM1 and PWM2 for controlling inverters 20 and 30 such that the AC power from commercial power source 90 applied through power input lines ACL1 and ACL2 to neutral points N1 and N2 is converted to a DC power and output to power line PL2.

Further, controller 60 controls SOC of electric storage B such that the SOC (represented by a value of 0 to 100%, with the fully charged state being 100 %) of electric storage B is within prescribed upper and lower limits of control. More specifically, when the SOC of electric storage B attains lower than a lower limit of control, controller 60 starts operation of engine 4 to generate electric power by motor generator MG1, so that charging of electric storage B is executed. Further, when the SOC exceeds an upper limit of control of SOC of electric storage B, controller 60 stops engine 4 to stop electric power generation by motor generator MG1.

Here, controller 60 receives the planned travel distance from the current position of hybrid vehicle 100 to the charging point where the electric storage B is charged by commercial power source 90 from car navigation device 55, and sets the upper and lower limits of control of SOC of the electric storage B based on the received planned travel distance. Specifically, controller 60 sets the SOC at which motor generator MG1 can start the operation of engine 4 as the lower limit level, and sets the upper and lower limits of control of SOC such that SOC is controlled to be lower as the planned travel distance to the charging point becomes shorter. Setting and control of the upper and lower limit values of SOC will be described in detail later.

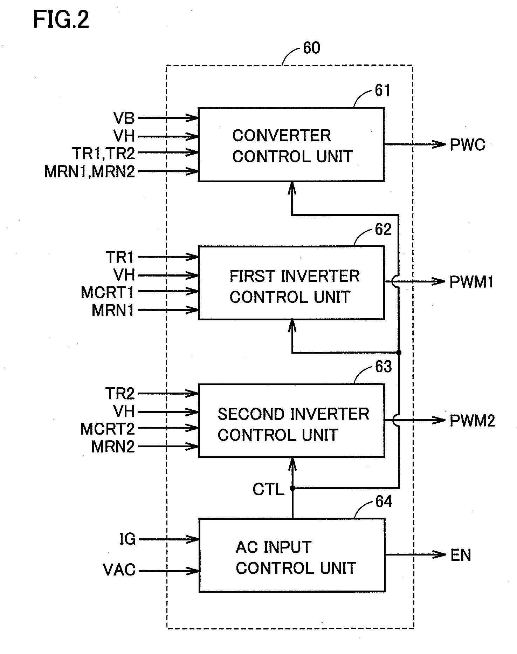

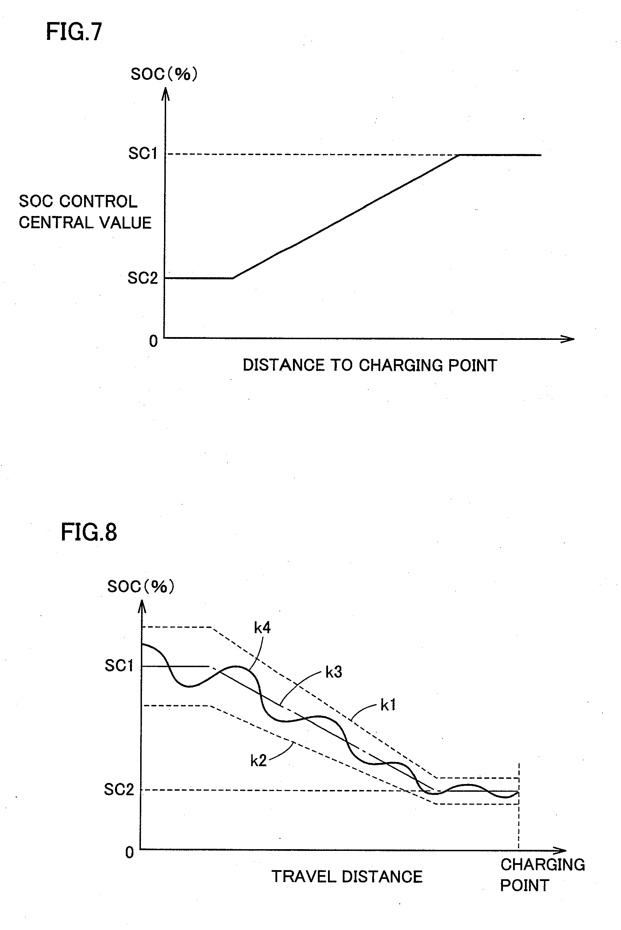

Next, the control of boost converter 10 and inverters 20 and 30 by controller 60, as well as charging control of electric storage B from commercial power source 90 will be described. In the description of Figs. 2 to 6 below, only the portions related to such control are extracted, and setting and control of the upper and lower limit values of SOC of the electric storage B by controller 60 will be described with reference to Fig. 7 and the following figures.

Fig. 2 is a block diagram of controller 60 shown in Fig. 1. Referring to Fig. 2, controller 60 includes a converter control unit 61, a first inverter control unit 62, a second inverter control unit 63, and an AC input control unit 64.

Converter control unit 61 generates, based on voltage VB from voltage sensor 70, voltage VH from voltage sensor 72, torque control values TR1 and TR2 and motor rotation numbers MRN1 and MRN2 of motor generators MG1 and MG2 output from an ECU (Electric Control Unit), not shown, and a control signal CTL from AC input control unit 64, the signal PWC for turning on/off the npn transistors Q1 and Q2 of boost converter 10, and outputs the generated signal PWC to boost converter 10.

The first inverter control unit 62 generates, based on torque control value TR1 and motor rotation number MRN1 of motor generator MG1, voltage VH, motor current MCRT1 from current sensor 80 and on a control signal CTL, the signal PWM1 for turning on/off the npn transistors Q11 to Q16 of inverter 20, and outputs the generated signal PWM1 to inverter 20.

The second inverter control unit 63 generates, based on torque control value TR2 and motor rotation number MRN2 of motor generator MG2, voltage VH, motor current MCRT2 from current sensor 82 and on the control signal CTL, the signal PWM2 for turning on/off the npn transistors Q21 to Q26 of inverter 30, and outputs the generated signal PWM2 to inverter 30.

Based on the signal IG from the ECU and on the voltage VAC from voltage sensor 74, AC input control unit 64 determines whether the electric storage B should be charged from commercial power source 90 outside the vehicle or not. If it is determined that charging should be done, AC input control unit 64 activates the control signal CTL output to converter control unit 61 and first and second inverter control units 62 and 63, and activates the input permission signal EN output to relay circuit 40.

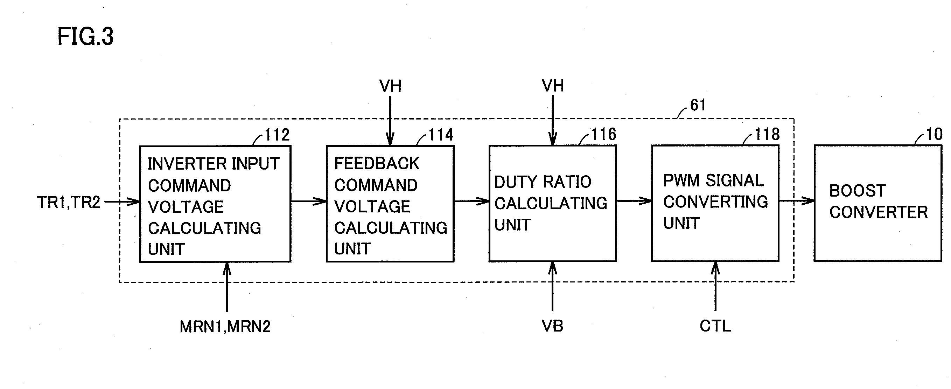

Fig. 3 is a functional block diagram of converter control unit 61 shown in Fig. 2. Referring to Fig. 3, converter control unit 61 includes an inverter input command voltage calculating unit 112, a feedback command voltage calculating unit 114, a duty ratio calculating unit 116, and a PWM signal converting unit 118.

Inverter input command voltage calculating unit 112 calculates the optimal value (target value) of inverter input voltage, that is, command voltage VH com, based on torque control values TR1, TR2 and motor rotation numbers MRN1 and MRN2, and outputs the calculated command voltage VH_com to feedback command voltage calculating unit 114.

Feedback command voltage calculating unit 114 calculates, based on the output voltage VH of boost converter 10 detected by voltage sensor 72 and on the command voltage VH_com from inverter input command voltage calculating unit 112, a feedback command voltage VH_com_fb for adjusting the output voltage VH to the command voltage VH_com, and outputs the calculated feedback command voltage VH_com_fb to duty ratio calculating unit 116.

Duty ratio calculating unit 116 calculates, based on the voltage VB from voltage sensor 70 and the feedback command voltage VH_com_fb from feedback command voltage calculating unit 114, a duty ratio for adjusting the output voltage VH of boost converter 10 to the command voltage VH_com, and outputs the calculated duty ratio to PWM signal converting unit 118.

Based on the duty ratio received from duty ratio calculating unit 116, PWM signal converting unit 118 generates the PWM (Pulse Width Modulation) signal for turning on/off the npn transistors Q1 and Q2 of boost converter 10, and outputs the generated PWM signal as the signal PWC to npn transistors Q1 and Q2 of boost converter 10.

When the on-duty of npn transistor Q2 of the lower arm of boost converter 10 is enlarged, power accumulation at reactor L increases, and therefore, an output of higher voltage can be attained. On the other hand, when the on-duty of npn transistor Q1 of the upper arm is enlarged, the voltage on power line PL2 lowers. Therefore, by adjusting the duty ratio of npn transistors Q1 and Q2, it becomes possible to set the voltage of power line PL2 to an arbitrary voltage not lower than the output voltage of electric storage B.

Further, PWM signal converting unit 118 renders conductive the npn transistor Q1 and renders npn transistor Q2 non-conductive, regardless of the output of duty ratio calculating unit 116 when the control signal CTL is active. Thus, it becomes possible to cause charging current from power line PL2 to PL1.

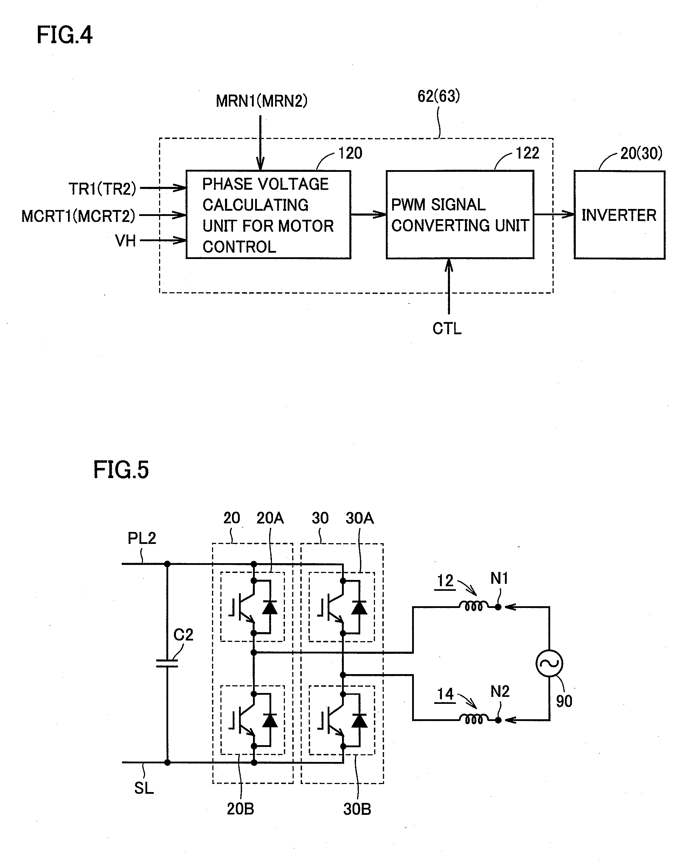

Fig. 4 is a functional block diagram of the first and second inverter control units 62 and 63 shown in Fig. 2. Referring to Fig. 4, the first and second inverter control units 62 and 63 each include a phase voltage calculating unit 120 for motor control and a PWM signal converting unit 122.

Phase voltage calculating unit 120 for motor control calculates, based on torque control value TR1 (or TR2) and motor rotation number MRN1 (or MRN2) from the ECU, motor current MCRT1 (or MCRT2) from current sensor 80 (or 82), and on the voltage VH from voltage sensor 72, the voltage to be applied to coils of respective phases of motor generator MG1 (or MG2), and outputs the calculated coil voltages of respective phases to PWM signal converting unit 122.

PWM signal converting unit 122 generates the signal PWM1_0 (one type of signal PWM1) (or PWM2_0 (one type of signal PWM2)) for actually turning on/off each of the npn transistors Q1 to Q16 (or Q21 to Q26) of inverter 20 (or 30) based on the command voltage for the coil of each phase received from phase voltage calculating unit 120 for motor control, and outputs the generated signal PWM1_0 (or PWM2_0) to each of the npn transistors Q11 to Q16 (or Q21 to Q26) of inverter 20 (or 30).

In this manner, each of the npn transistors Q11 to Q16 (or Q21 to Q26) is switching-controlled, and the current caused to flow to each phase of motor generator MG1 (or MG2) is controlled such that the motor generator MG1 (or MG2) outputs the designated torque. As a result, the motor torque in accordance with the torque control value TR1 (or TR2) is output.

When the control signal CTL from AC input control unit 64 is active, PWM signal converting unit 122 generates a signal PWM1_1 (one type of signal PWM1) (or PWM2_1 (one type of signal PWM2)) turning on/off npn transistors Q11 to Q16 (or Q21 to Q26) such that AC currents of the same phase flow through U-phase arm 22 (or 32), V-phase arm 24 (or 34) and W-phase arm 26 (or 36) of inverter 20 (or 30) regardless of the output from phase voltage calculating unit 120 for motor control, and outputs the generated signal PWM1_1 (or PWM2_1) to npn transistors Q11 to Q16 (or Q21 to Q26) of inverter 20 (or 30).

When AC currents of the same phase flow through coils U1, V1 and W1 (or U2, V2 and W2) of respective phases of U, V and W, rotation torque does not generate in the motor generator MG1 (or MG2). As will be described in the following, as inverters 20 and 30 are controlled in coordinated manner, the AC voltage VAC from commercial power source 90 applied to neutral points N1 and N2 is converted to a DC voltage, and supplied to power line PL2.

Fig. 5 shows a zero-phase equivalent circuit of motor generators MG1 and MG2 and inverters 20 and 30 shown in Fig. 1. In each of inverters 20 and 30 as three-phase inverters, there are 8 patterns of on/off combination of six npn transistors. Among the eight switching patterns, two have interphase voltage of zero, and such voltage state is referred to as "zero voltage vector." For the zero voltage vector, three transistors of the upper arm can be regarded as in the same switching state (all on, or all off), and three transistors of the lower arm can also be regarded as in the same switching state. Therefore, in Fig. 2, npn transistors Q11, Q13 and Q15 of inverter 20 are generally represented as upper arm 20A, and npn transistors Q12, Q14 and Q16 of inverter 20 are generally represented as lower arm 20B. Similarly, npn transistors Q21, Q23 and Q25 of inverter 30 are generally represented as upper arm 30A, and npn transistors Q22, Q24 and Q26 of inverter 30 are generally represented as lower arm 30B.

As shown in Fig. 5, the zero phase equivalent circuit can be regarded as a single phase PWM converter having single phase commercial power source 90 electrically connected to neutral points N1 and N2 through relay circuit 40, not shown, and input terminal 50, as an input. Therefore, by switching control of inverters 20 and 30 such that the inverters 20 and 30 operate as arms of respective phases of the single-phase PWM converter by changing the zero voltage vector in each of inverters 20 and 30, it becomes possible to convert the single phase AC power from commercial power source 90 to a DC power and to supply the power to power line PL2.

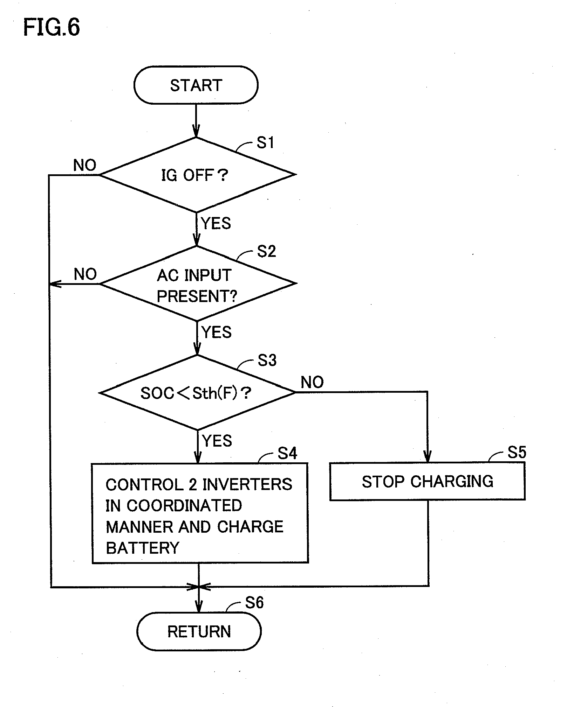

Fig. 6 is a flow chart representing a control structure of the program related to a determination as to whether charging is to be started or not by the controller 60 shown in Fig. 1. The process of the flowchart is called from the main routine and executed at every prescribed time period or every time prescribed conditions are satisfied.

Referring to Fig. 6, controller 60 determines, based on the signal IG from the ignition key, whether the ignition key is turned to the OFF position or not (step S1) When controller 60 determines that the ignition key is not turned to the OFF position (NO at step S1), it determines that connecting the commercial power source 90 to input terminal 50 for charging electric storage B is inappropriate, and therefore, the process proceeds to step S6 and the control is returned to the main routine.

When it is determined at step S 1 that the ignition key is turned to the OFF position (YES at step S1), based on the voltage VAC from voltage sensor 74, controller 60 determines whether an AC power is input to input terminal 50 from commercial power source 90 or not (step S2). When the voltage VAC is not observed, controller 60 determines that the AC power is not input to input terminal 50 (NO at step S2), and therefore, the process proceeds to step S6 and the control is returned to the main routine.

When voltage VAC is observed, controller 60 determines that the AC power is input from commercial power source 90 to input terminal 50 (YES at step S2). Then, controller 60 determines whether SOC of electric storage B is lower than a threshold value Sth(F) or not (step S3). Here, the threshold value Sth(F) is a value for determining whether SOC of electric storage B is sufficient or not.

When it is determined that SOC of electric storage B is lower than the threshold value Sth(F) (YES at step S3), controller 60 activates the input permission signal EN to be output to relay circuit 40. Then, controller 60 performs switching control of two inverters 20 and 30 regarding these as arms of respective phases of the single-phase PWM converter, while the arms of respective phases of each of two inverters 20 and 30 are operated in the same switching state, to execute charging of electric storage B (step S4).

If it is determined at step S3 that SOC of electric storage B is not lower than the threshold value Sth(F) (NO at step S3), controller 60 determines that charging of electric storage B is unnecessary, and executes a charge stop process (step S5). Specifically, controller 60 stops inverters 20 and 30, and inactivates the input permission command EN that has been input to relay circuit 40.

Next, setting control of the upper and lower limit values for SOC control of electric storage B by controller 60 will be described in the following.

Fig. 7 shows the concept of SOC control amount of electric storage B shown in Fig. 1. Referring to Fig. 7, the ordinate represents the central value of SOC control of electric storage B (median of the upper and lower limit values of SOC control, which may indicate the control target of SOC of the electric storage B), and the abscissa represents the planned travel distance from the current position of hybrid vehicle 100 to a preset charging point (for example, home).

The value SC1 represents the control target of SOC of the conventional level, which is set, for example, to about 60%. Then, controller 60 sets a value SC2 smaller than the value SC1 as the lower limit, and decreases the central value of SOC control as the planned travel distance from the current position to the charging point becomes shorter. Specifically, controller 60 sets the control target of SOC (actually, the upper and lower limit values of SOC) lower, as the hybrid vehicle 100 comes closer to the charging point.

The reason why SOC control target is set lower as the hybrid vehicle 100 comes closer to the charging point is that hybrid vehicle 100 should arrive at the charging point with SOC as low as possible while not affecting traveling, so that the amount of charge from commercial power source 90 to electric storage B is increased. By such an approach, it becomes possible to use large amount of power from commercial power source 90 for generating vehicle driving force, and as a result, dependency on engine 4 can be reduced.

The reason why the value SC2 is set as the lower limit level is as follows. If charging of electric storage B from commercial power source 90 should fail (for example, immediate departure after arrival becomes necessary, or commercial power source 90 should be blacked out), while charging of electric storage B by commercial power source 90 was expected after arriving the charging point such as one's home, electric power sufficient to start the operation of engine 4 using motor generator MG1 must be retained in electric storage B. By this approach, failure of starting engine 4 can be avoided even when immediate departure without charging becomes necessary after arriving at the charging point.

Fig 8 shows SOC variation of electric storage B. Referring to Fig. 8, the ordinate represents the SOC of electric storage B, and the abscissa represents the travel distance of hybrid vehicle 100. The dotted line k1 indicates upper limit value of SOC control, and the dotted line k2 indicates the lower limit value of SOC control. Further, chain-dotted line k3 represents the central value of the upper and lower limit values for control, and solid line k4 represents the actual change of SOC.

Controller 60 controls SOC such that SOC does not exceed the upper and lower control limit values. As shown in the figure, controller 60 sets the upper and lower limit values for SOC control to be lower as the charging point comes closer. As a result, SOC of electric storage B lowers as the charging point comes closer, and in the vicinity of charging point, it is close to the lower limit level of SC2.

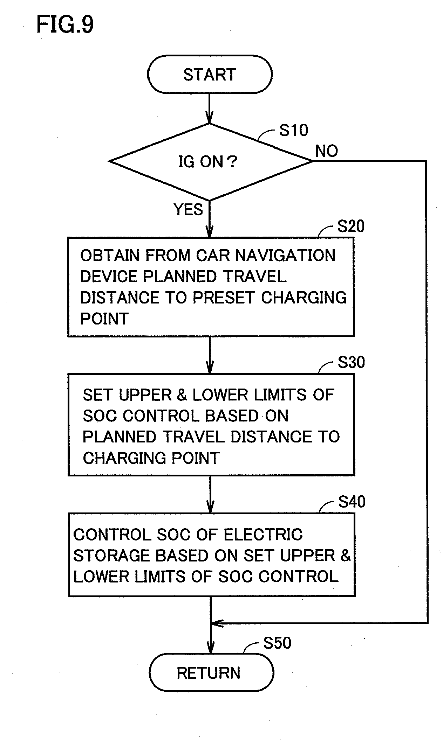

Fig. 9 is a flowchart of the process related to the SOC control of electric storage B by controller 60 shown in Fig. 1. The process of the flowchart is called from the main routine and executed at every prescribed time period or every time prescribed conditions are satisfied.

Referring to Fig. 9, controller 60 determines whether the ignition key is turned to the ON position or not, based on a signal IG from the ignition key (step S10). If it is determined that the ignition key is not turned to the ON position (NO at step S10), controller 60 proceeds to step S50 without executing SOC control, and then returns control to the main routine.

If it is determined at step S10 that the ignition key is turned to the ON position (YES at step S10), controller 60 obtains, from car navigation device 55, the planned travel distance from the current position of hybrid vehicle 100 to the preset charging point (for example, home), calculated by car navigation device 55 (step S20).

Then, based on the thus obtained planned travel distance to the charging point, controller 60 sets the upper and lower limit values for controlling SOC (step S30). Specifically, controller 60 sets the upper and lower limit values for controlling SOC such that the limit values are lower as the planned travel distance to the charging point becomes shorter, as shown in Figs. 7 and 8, based on a map or an equation showing relation between the planned travel distance to the charging point and the upper and lower limit values for controlling SOC.

Then, controller 60 adjusts the amount of power consumption by motor generator MG2 and the amount of power generation by motor generator MG 1 such that the SOC is within the range between the set upper and lower limit values for control, thereby controlling charging/discharging current amount of electric storage B, and controlling SOC of the electric storage B.

In the foregoing, in order to prevent failure in starting the operation of engine 4 at the charging point, in setting the upper and lower limit values of SOC control, the lower limit level, of which central value (corresponding to the control target of SOC) between the upper and lower limit values is represented by SC2, is provided, and the value SC2 may preferably be increased/decreased in accordance with the situation of engine 4 or electric storage B.

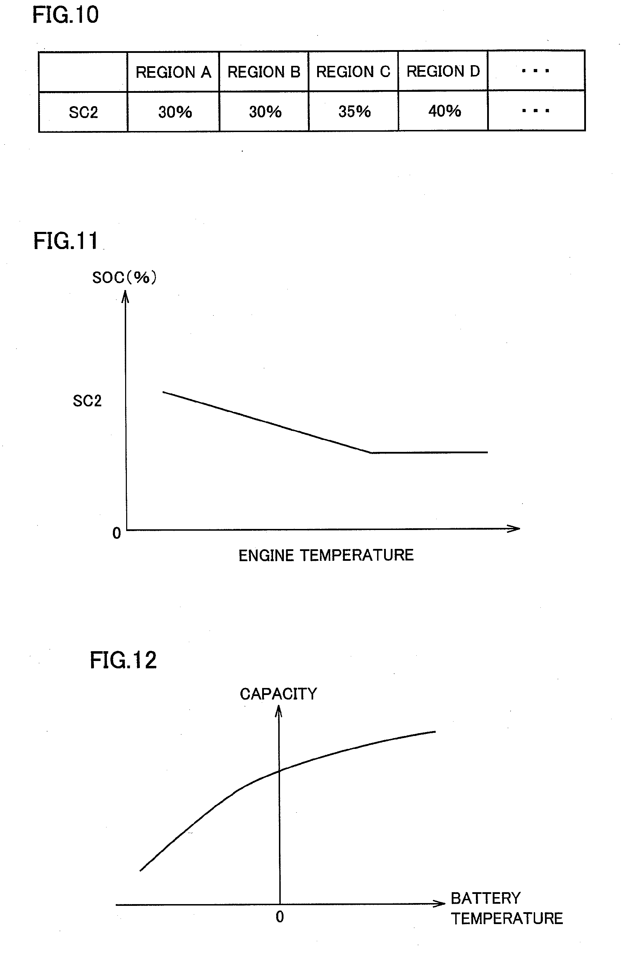

Fig. 10 shows exemplary setting of the value SC2 that corresponds to the lower limit level of SOC control target. Referring to Fig. 10, the value SC2 is set differently region by region where the charging point for charging electric storage B belongs. By way of example, assume that regions A and B are warm regions, C is a cold region and D is an extremely cold region. When the charging point belong to regions A and B, the value SC2 is set to 30%, when the charging point belongs to the region C, the value SC2 is set to 35%, and when the charging point belongs to the region D, the value SC2 is set still higher to 40%.

The value SC2 is set in this manner because, as the temperature of engine 4 is lower, oil viscosity increases, dynamic resistance of cranking increases, and larger torque current is necessary to start the operation of engine 4 using motor generator MG1, and therefore, it is necessary to ensure higher SOC in colder regions.

To which region the charging point belongs is determined based on position information from car navigation device 55.

Fig. 11 shows another exemplary setting of the value SC2 that corresponds to the lower limit level of SOC control target. Referring to Fig. 11, the abscissa represents the temperature of engine 4. In this exemplary setting, when the temperature of engine 4 detected by a temperature sensor, not shown, becomes lower, the value SC2 is set higher. The reason why the value SC2 is set in this manner is as described above. As the temperature of engine 4, the temperature of cooling water cooling engine 4 may be used.

Alternatively, the value SC2 may be set in consideration of the temperature of electric storage B. Fig. 12 shows temperature dependency of the capacity of electric storage B. Referring to Fig. 12, the ordinate represents the capacity of electric storage B, and the abscissa represents temperature. As shown in the figure, the capacity of electric storage B decreases as the temperature lowers. Therefore, the SOC, which is sufficient to supply electric power necessary to start the operation of engine 4 to motor generator MG1 at a normal temperature, may not be sufficient to supply the electric power necessary to start the operation of engine 4 to motor generator MG1 at a lower temperature. Therefore, by setting the value SC2 larger as the temperature becomes lower, failure of starting engine 4 can more reliably be avoided.

As described above, in hybrid vehicle 100 in accordance with the present embodiment, the upper and lower limit values for SOC control are set lower as the planned travel distance form the current position of the vehicle to the preset charging point is shorter, and therefore, the SOC of electric storage B attains lower than usual when the vehicle reaches the charging point. Therefore, at the charging point, electric storage B can be charged with sufficient amount of charges from commercial power source 90. As a result, dependency on engine 4 during traveling can be reduced, and the vehicle comes to have better mileage. Further, it can better contribute to environmental conservation.

Further, when the charging point is set to one's home where the driver can charge the electric storage B sufficiently at low cost using commercial power source 90 after returning home, any charging point on the way to the destination is excluded. Therefore, unnecessarily long charging time at such a charging point can be avoided.

Further, the minimum necessary electric power is retained in electric storage B to start the operation of engine 4 by motor generator MG1 using electric power of electric storage B upon arriving at the preset charging point, and therefore, even when immediate departure without charging becomes necessary after arriving at the charging point, failure of starting engine 4 can be avoided.

Further, the AC power from commercial power source 90 is applied to neutral points N1 and N2, and by coordinated control of inverters 20 and 30, the AC power is converted to DC power to charge the electric storage B. Therefore, it is unnecessary to provide a separate charging device. Consequently, the vehicle can be reduced in size and better fuel efficiency can be attained as a result of weight reduction.

In the embodiment above, controller 60 is described as controlling SOC of electric storage B within a prescribed control range. It may control the SOC of electric storage B to a prescribed control target value.

Further, in the embodiment above, the AC electric power from commercial power source 90 is applied to the neutral points N1 and N2 of motor generators MG1 and MG2, and using coils of respective phases of motor generators MG1 and MG2 and inverters 20 and 30, the electric storage B is charged. The present invention, however, may be applicable to a hybrid vehicle having a separate, external charging device (AC/DC converter) inside or outside of the vehicle. The above-described embodiment, however, is advantageous to reduce cost and weight of the vehicle, as it is unnecessary to provide separate external charging device.

In the foregoing, engine 4 corresponds to the "internal combustion engine" of the present invention, and motor generator MG2 corresponds to the "electric motor" of the present invention. Further, motor generator MG1 and inverter 20 constitute the "electric power generating device" of the present invention, and input terminal 50 corresponds to the "electric power input unit" of the present invention. Further, the processes of steps S30 and S40 executed by controller 60 correspond to the processes executed by "setting unit" and "control unit" of the present invention, respectively, and car navigation device 55 corresponds to the "position detecting unit" of the present invention.

Further, motor generator MG 1 corresponds to the "additional electric motor" of the present invention, and inverter 20 corresponds to the "first inverter" of the present invention. Further, inverter 30 corresponds to the "second inverter" of the present invention, and the first and second inverter control units 62 and 63 and AC input control unit 64 constitute the "inverter control unit". Further, three-phase coils 12 and 14 correspond to the "first poly-phase winding" and the "second poly-phase winding" of the present invention, and neutral points N1 and N2 correspond to the "first neutral point" and the "second neutral point" of the present invention, respectively.

The embodiments as have been described here are mere examples and should not be interpreted as restrictive. The scope of the present invention is determined by each of the claims with appropriate consideration of the written description of the embodiments and embraces modifications within the meaning of, and equivalent to, the languages in the claims.

## Claims

1. A hybrid vehicle having an internal combustion engine and an electric motor mounted as power sources, comprising:
a rechargeable electric storage supplying electric power to said electric motor;
an electric power generating device generating electric power using an output of said internal combustion engine and supplying the generated electric power to said electric storage;
an electric power input unit receiving electric power applied from the outside of the vehicle for charging said electric storage;
control means for controlling an amount of charge from said electric power generating device to said electric storage such that a state amount representing state of charge of said electric storage is adjusted within a prescribed control range or to a control target value;
position detecting means for detecting current position of the hybrid vehicle; and
setting means for setting a threshold value defining said prescribed control range or said control target value lower, as travel distance from the current position detected by said position detecting means to a preset charging point is shorter.

2. The hybrid vehicle according to claim 1, wherein
said electric power applied from the outside of said vehicle is electric power from a commercial power source; and
said charging point is home of the user of said hybrid vehicle.

3. The hybrid vehicle according to claim 1, wherein
when said internal combustion engine is stopped, said electric power generating device can start an operation of said internal combustion engine using electric power from said electric storage; and
said setting means sets said threshold value or said control target value such that said state amount does not fall below a lower limit level at which said electric power generating device can start the operation of said internal combustion engine using the electric power from said electric storage.

4. The hybrid vehicle according to claim 3, wherein
said setting means changes said lower limit level in accordance with a region to which said charging point belongs.

5. The hybrid vehicle according to claim 3, wherein
said setting means changes said lower limit level in accordance with temperature of said internal combustion engine.

6. The hybrid vehicle according to claim 3, wherein
said setting means changes said lower limit level in accordance with temperature of said electric storage.

7. The hybrid vehicle according to any one of claims 1 to 6, wherein
said electric power generating device includes
an additional electric motor having a rotation shaft mechanically linked to a crank shaft of said internal combustion engine, and
a first inverter provided corresponding to said additional electric motor;
said hybrid vehicle further comprising:
a second inverter provided corresponding to said electric motor; and
inverter control means for controlling said first and second inverters; wherein said additional electric motor and said electric motor include first and second poly-phase windings as stator windings, respectively;
said electric power input unit is connected to a first neutral point of said first poly-phase winding and to a second neutral point of said second poly-phase winding and applies AC power supplied from the outside of the vehicle to said first and second neutral points; and
said inverter control means controls said first and second inverters in a coordinated manner such that when said AC power is supplied to said first and second neutral points, said AC power is converted to DC power and output to said electric storage.

8. A method of controlling a hybrid vehicle having an internal combustion engine and an electric motor mounted as power sources, wherein
said hybrid vehicle includes
a rechargeable electric storage supplying electric power to said electric motor;
an electric power generating device generating electric power using an output of said internal combustion engine and supplying the generated electric power to said electric storage;
an electric power input unit receiving electric power applied from the outside of the vehicle for charging said electric storage; and
a position detecting unit configured to be capable of detecting current position of the hybrid vehicle;
said control method comprising:
the first step of obtaining, from said position detecting unit, a planned travel distance from the current position of said hybrid vehicle to a preset charging point;
the second step of setting a threshold value defining a control range of a state amount representing state of charge of said electric storage or a control target value of said state amount lower as said planned travel distance is shorter; and
the third step of controlling an amount of charge from said electric power generating device to said electric storage such that said state amount is adjusted within said control range or to said control target value.

9. The control method according to claim 8, wherein
said electric power applied from the outside of said vehicle is electric power from a commercial power source; and
said charging point is home of the user of said hybrid vehicle.

10. The control method according to claim 8, wherein
when said internal combustion engine is stopped, said electric power generating device can start an operation of said internal combustion engine using electric power from said electric storage; and
at said second step, said threshold value or said control target value is set such that said state amount does not fall below a lower limit level at which said electric power generating device can start the operation of said internal combustion engine using the electric power from said electric storage.

11. The control method according to claim 10, wherein
said lower limit level is changed in accordance with a region to which said charging point belongs.

12. The control method according to claim 10, wherein
said lower limit level is changed in accordance with temperature of said internal combustion engine.

13. The control method according to claim 10, wherein
said lower limit level is changed in accordance with temperature of said electric storage.

14. The control method according to any one of claims 8 to 13, wherein
said electric power generating device includes
an additional electric motor having a rotation shaft mechanically linked to a crank shaft of said internal combustion engine, and
a first inverter provided corresponding to said additional electric motor;
said hybrid vehicle further includes a second inverter provided corresponding to said electric motor;
said additional electric motor and said electric motor include first and second poly-phase windings as stator windings, respectively;
said electric power input unit is connected to a first neutral point of said first poly-phase winding and to a second neutral point of said second poly-phase winding and applies AC power supplied from the outside of the vehicle to said first and second neutral points; and
said control method further comprising the fourth step of controlling said first and second inverters in a coordinated manner such that when said AC power is supplied to said first and second neutral points, said AC power is converted to DC power and output to said electric storage.
